# DEMANDE DE BREVET EUROPEEN

(11) **EP 1 338 221 A1**
(43) Date de publication de la demande: **27.08.2003**
(21) Numéro de dépôt: 03356031.9
(22) Date de dépôt: 21.02.2003
(51) Int. Cl.: A47C 23/00, B29C 45/16

(54) **Elément de suspension**

(30) Priorité: 22.02.2002 FR 0202288
(71) Demandeur: PRM, 01810 Groissiat (FR)
(72) Inventeur: Mathy, Bernard, 01100 Bellignat (FR)
(74) Mandataire: Maureau, Philippe

(57) **Abrégé**

Ce dispositif de suspension destiné à être interposé entre une surface de base tel qu'un sommier et un élément rembourré tel qu'un matelas caractérisé en ce qu'il comprend
un élément élastique (2) présentant une embase (4) disposée sur la surface de base de laquelle s'étendent au moins trois bras (5) en arc de cercle, ces bras (5) supportant un élément d'appui plan (3) destiné à supporter l'élément rembourré,
l'extrémité de chacun des bras présente au moins une rainure (8) en contre dépouille dans laquelle est engagée une nervure (9) de forme complémentaire venue de moulage avec l'élément d'appui (3).

## Description

La présente invention concerne un élément de suspension pour literie ou pour siège.

On connaît de nombreux éléments destinés à être interposés entre une surface d'appui et un élément rembourré tel qu'un matelas.

Généralement un réseau comprenant un grand nombre de ces dispositifs est disposé sur une surface d'appui telle qu'un sommier.

Ces dispositifs procurent un très grand confort d'utilisation puisqu'ils réalisent un contact ponctuel et présentent donc une réponse adaptée à une sollicitation particulière.

Un dispositif de suspension de ce type comprend un élément d'appui en matière plastique destiné à venir en appui contre l'élément rembourré et un élément ressort en matière plastique comprenant quatre bras compris dans un plan qui sont recourbés et viennent s'encliqueter dans des logements prévus sur l'une des faces de l'élément de soutien comme le montre le document WO 0115572.

Ce dispositif est peu coûteux à produire mais présente plusieurs inconvénients majeurs. D'une part, l'assemblage peut être délicat à réaliser, puisqu'il faut recourber les bras pour les encliqueter. D'autre part, les liaisons à encliquetage qui présentent nécessairement des jeux fonctionnels pour permettre l'introduction d'une pièce de la liaison dans une autre pièce de la liaison se révèlent bruyants en cours d'utilisation.

Enfin, ces dispositifs présentent une très mauvaise tenue en fatigue, c'est-à-dire sous des efforts cycliques répétés. En effet, les pièces en matières plastiques, du fait de l'orientation moléculaire qui se produit lors de leur moulage, ont tendance à reprendre la configuration géométrique qu'elles occupaient à la sortie du moule. Or, le fait que l'élément ressort sorte du moulage dans une configuration dans laquelle les bras sont à plat puis sont recourbés dans leur position d'utilisation peut conduire à des risques de rupture des bras.

L'invention vise à remédier à ces inconvénients et un but de celle-ci est de présenter un dispositif de suspension pour literie qui présente une bonne tenue en fatigue tout en étant d'une utilisation silencieuse.

A cet effet, ce dispositif de suspension destiné à être interposé entre une surface de base tel qu'un sommier et un élément rembourré tel qu'un matelas comprend un élément présentant une embase disposée sur la surface de base de laquelle s'étendent au moins trois bras en arc de cercle, ces bras supportant un élément d'appui plan destiné à supporter l'élément rembourré, l'extrémité de chacun des bras présente au moins une rainure en contre dépouille dans laquelle est engagée une nervure de forme complémentaire venue de moulage avec l'élément d'appui.

Grâce à ses bras en arc de cercle, le dispositif selon l'invention présente une très bonne tenue en fatigue et la liaison mécanique entre l'extrémité des bras au nombre d'au moins trois, d'une part, est indémontable et, d'autre part, est totalement silencieuse du fait de l'absence de jeu fonctionnel entre les rainures en contre dépouille et les nervures issues de moulage.

De plus, au moins l'un des bras présente à son extrémité un pion venu de moulage s'engageant dans une cavité complémentaire ménagée dans l'élément d'appui.

Selon un mode de réalisation préféré de l'invention, l'extrémité de chacun des bras présente deux rainures parallèles en contre dépouille dans lesquelles s'engagent deux nervures complémentaires venues de moulage avec l'élément d'appui.

De préférence, l'extrémité de chacun des bras comprend une platine parallèle à l'embase dans laquelle est ménagée la rainure au nombre d'au moins une.

Une caractéristique particulièrement avantageuse prévoit que les bras présentent une pluralité d'ondulations transversales parallèles les unes aux autres.

Ces ondulations évitent la concentration des contraintes au niveau de la zone médiane des bras, mais permettent une répartition de celle-ci entre chacune des ondulations.

De préférence, le dispositif comprend quatre bras orientés à 90° les uns des autres depuis l'embase.

Selon une possibilité, l'élément élastique est constitué de résine acétale et l'élément d'appui est constitué de polypropylène.

L'invention concerne également un procédé de réalisation un dispositif de suspension comprenant les étapes consistant à :
- mouler par injection de matière plastique un élément élastique comprenant une embase de laquelle s'étendent au moins trois bras en arc de cercle, l'extrémité de chacun des bras présentant une rainure en contre dépouille,
- démouler l'élément élastique,
- mouler par injection de matière plastique un élément plan d'appui en contact de l'extrémité des bras, la matière plastique étant injectée dans les rainures en contre dépouille assurant un emboîtage indémontable.

Pour sa bonne compréhension, l'invention est décrite en référence au dessin ci-annexé représentant, à titre d'exemple non limitatif, un dispositif de suspension selon celle-ci.

Les figures 1 et 2 montrent en coupe selon I-I de la figure 3 le dispositif en cours de réalisation,
la figure 3 montre le dispositif en vue de dessous,
la figure 4 montre une variante de réalisation.

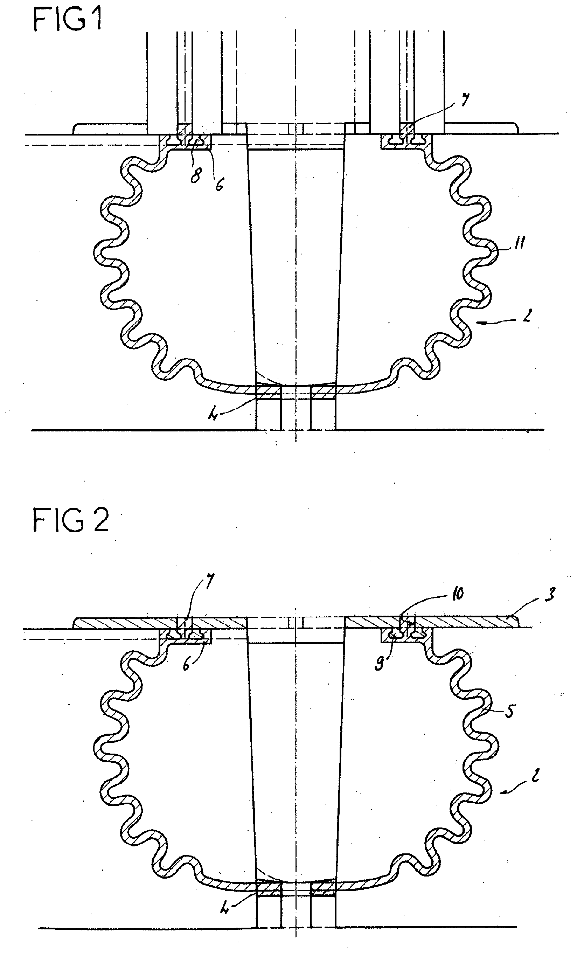

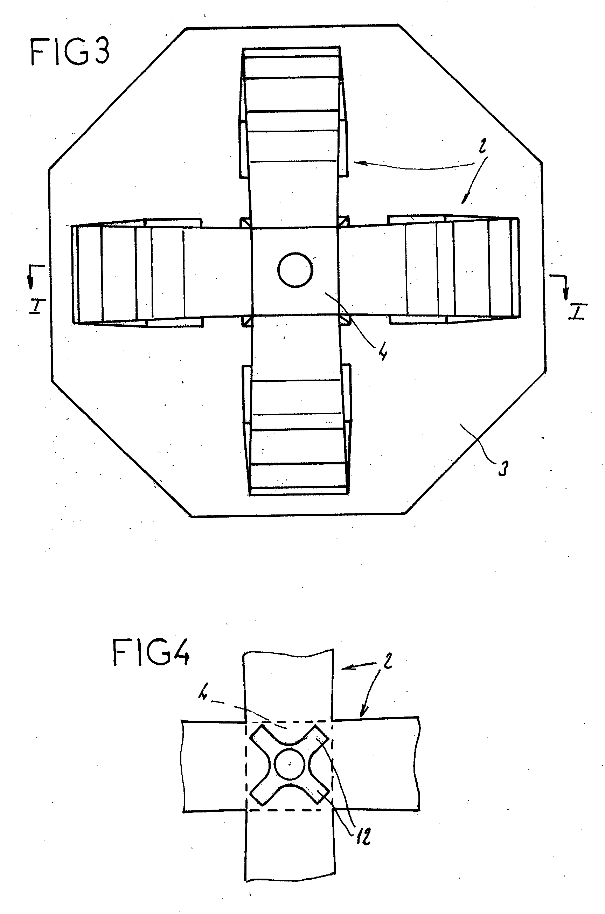

Comme on peut le voir sur les figures 2 et 3, le dispositif comprend un élément élastique 2 et un élément d'appui plan 3.

L'élément élastique 2 comprend une embase 4 de laquelle s'étendent quatre bras 5 en arc de cercle. En se référant à la figure 3 on peut voir que les bras 5 sont orientés à 90° les uns des autres.

A leur extrémité, les bras présentent chacun une platine 6 dans laquelle sont ménagées deux rainures 8 en contre dépouille et de laquelle dépasse un pion 7.

En outre, les bras 5 présentent chacun une pluralité d'ondulations 11 parallèles les unes aux autres.

L'élément élastique 2 est constitué de résine acétale qui présente une grande qualité d'élasticité et est moulée par injection au cours d'une première opération de moulage dans laquelle est mis en oeuvre un moule comprenant quatre tiroirs perpendiculaires permettant de démouler les quatre bras 5 en arc de cercle.

L'élément d'appui plan 3, qui comprend des nervures 9 complémentaires des rainures 8 en contre dépouille et des cavités 10 complémentaires des pions 7, est moulé au cours d'une seconde opération de moulage.

Au cours de cette seconde opération, une matière plastique telle que du polypropylène est injectée dans une empreinte disposée par rapport à l'élément élastique 2, de telle sorte que la matière plastique est injectée dans les rainures 8 en contre dépouille formant ainsi une nervure 9 et autour des pions 7 formant ainsi une cavité 10.

Lors de sa solidification, l'élément d'appui subit un retrait qui confère à l'assemblage mécanique entre l'élément élastique et l'élément d'appui plan un caractère totalement indémontable.

L'élément ainsi obtenu peut être mis en place sur un plan de base tel qu'une planche de sommier ou sur des lattes transversales d'un sommier. Les éléments peuvent être disposés en réseau sur la totalité du plan de base ou sur des zones localisées par exemple au niveau des épaules d'un utilisateur. Un matelas peut être ensuite placé sur ces derniers.

Les éléments de suspension confèrent au couchage une excellente élasticité puisque l'élément élastique est moulé dans sa position d'utilisation et compte tenu de la mémoire des matériaux plastiques moulés, il tend à retrouver sa définition géométrique de sortie de moulage après chaque sollicitation.

En outre, sa tenue en fatigue, c'est-à-dire sous des efforts cycliques répétés est remarquable du fait de son moulage en position d'utilisation et grâce aux ondulations 11 qui permettent d'éviter une concentration des efforts au niveau de la zone médiane de chacun des bras.

La figure 4 représente une variante de réalisation de l'embase 4 dans laquelle celle-ci présente quatre nervures orthogonales 12. Ces nervures sont susceptibles de s'engager dans des empreintes pratiquées dans la surface de base et permettent de réaliser une indexation du dispositif par rapport à celle-ci. Ceci présente un intérêt particulier lorsque l'élément d'appui plan (3) présente une géométrie rectangulaire.

Il va de soi que l'invention n'est pas limitée au mode de réalisation décrit ci-dessus à titre d'exemple non limitatif mais qu'elle en embrasse au contraire toutes les variantes de réalisation. Ainsi, les éléments de suspension pourraient être fixés sur le plan de base par tout type de matières appropriées tel que vissage, collage ou rivetage. En outre, d'autres matières plastiques que celles décrites précédemment pourraient entrer dans la composition de l'élément élastique et de l'élément de support. Par ailleurs, la rainure 8 pourrait présenter toute configuration géométrique permettant de rendre indémontable la liaison entre l'élément élastique 2 et l'élément d'appui 3. Cette liaison pourrait également être une liaison chimique grâce à des matériaux compatibles.

## Revendications

1. Dispositif de suspension destiné à être interposé entre une surface de base tel qu'un sommier et un élément rembourré tel qu'un matelas **caractérisé en ce qu'**il comprend
un élément élastique (2) présentant une embase (4) disposée sur la surface de base de laquelle s'étendent au moins trois bras (5) en arc de cercle, ces bras (5) supportant un élément d'appui plan (3) destiné à supporter l'élément rembourré,
l'extrémité de chacun des bras présente au moins une rainure (8) en contre dépouille dans laquelle est engagée une nervure (9) de forme complémentaire venue de moulage avec l'élément d'appui (3).

2. Dispositif de suspension selon la revendication 1, **caractérisé en ce qu'**au moins l'un des bras (5) présente à son extrémité un pion (7) venu de moulage s'engageant dans une cavité (10) complémentaire ménagée dans l'élément d'appui (3).

3. Dispositif de suspension selon la revendication 1 ou 2, **caractérisé en ce que** l'extrémité de chacun des bras (5) présente deux rainures (8) parallèles en contre dépouille dans lesquelles s'engagent deux nervures (9) complémentaires venues de moulage avec l'élément d'appui (3).

4. Dispositif de suspension selon l'une des revendications 1 à 3, **caractérisé en ce que** l'extrémité de chacun des bras (5) comprend une platine (6) parallèle à l'embase dans laquelle est ménagée la rainure (8) au nombre d'au moins une.

5. Dispositif selon l'une des revendications 1 à 4, **caractérisé** en ce les bras (5) présentent une pluralité d'ondulations (11) transversales parallèles les unes aux autres.

6. Dispositif selon l'une des revendications 1 à 5, **caractérisé en ce qu'**il comprend quatre bras (5) orientés à 90° les uns des autres depuis l'embase.

7. Dispositif selon l'une des revendications 1 à 6, **caractérisé** en ce l'élément élastique (2) est constitué de résine acétale et l'élément d'appui (3) est constitué de polypropylène.

8. Procédé de réalisation d'un dispositif de suspension **caractérisé en ce qu'**il comprend les étapes consistant à :
- mouler par injection de matière plastique un élément élastique (2) comprenant une embase (4) de laquelle s'étendent au moins trois bras (5) en arc de cercle, l'extrémité de chacun des bras présentant une rainure (8) en contre dépouille,
- démouler l'élément élastique (2),
- mouler par injection de matière plastique un élément plan d'appui (3) en contact de l'extrémité des bras (5), la matière plastique étant injectée dans les rainures (8) en contre dépouille assurant un emboîtage indémontable.
